# EUROPÄISCHE PATENTSCHRIFT

(11) **EP 2 699 994 B1**
(45) Veröffentlichungstag und Bekanntmachung des Hinweises auf die Patenterteilung: **01.06.2016**
(21) Anmeldenummer: 12716241.0
(22) Anmeldetag: 12.04.2012
(51) Int. Cl.: G06F 3/0488, G06F 3/0484

(54) **VERFAHREN ZUM BEEINFLUSSEN DER DARSTELLUNG EINER AUF EINER ANZEIGEEINRICHTUNG EINES INFORMATIONSTECHNISCHEN GERÄTS ANGEZEIGTEN BILDHAFTEN INFORMATION**
METHOD FOR INFLUENCING THE PRESENTATION OF PICTORIAL INFORMATION DISPLAYED ON A DISPLAY DEVICE OF AN INFORMATION TECHNOLOGY DEVICE
PROCÉDÉ POUR INFLUENCER LA REPRÉSENTATION D'UNE INFORMATION IMAGE AFFICHÉE SUR UN DISPOSITIF D'AFFICHAGE D'UN APPAREIL DE TECHNOLOGIE DE L'INFORMATION

(43) Veröffentlichungstag der Anmeldung: 26.02.2014
(73) Patentinhaber: Unify GmbH & Co. KG, 81379 München (DE)
(72) Erfinder: LEDERER, Thomas, 82211 Herrsching (DE)
(74) Vertreter: Fritzsche, Thomas
(86) Internationale Anmeldenummer: PCT/EP2012/001622
(87) Internationale Veröffentlichungsnummer: WO 2013/152782

(56) Entgegenhaltungen:
- EP-A2- 2 045 699
- EP-A2- 2 189 892
- US-A1- 2009 282 370

## Beschreibung

Die vorliegende Erfindung betrifft ein Verfahren zum Beeinflussen der Darstellung einer auf einem Touchscreen eines informationstechnischen Geräts angezeigten bildhaften Information gemäß Anspruch 1. Ferner betrifft die vorliegende Erfindung ein dieses Verfahren ausführendes Computerprogrammprodukt für eine entsprechende Steuereinrichtung eines informations-technischen Geräts, einen Datenträger mit dem darauf gespeicherten Computerprogrammprodukt und ein informationstechnisches Gerät mit einer Steuereinrichtung, die für die Ausführung des vorgenannten Verfahrens ausgestaltet ist, gemäß dem Anspruch 7, 8 bzw. 9.

Informationstechnische Geräte im Sinne der vorliegenden Erfindung sind beispielsweise Desktop-Computer, Laptops bzw. Notebooks sowie Mobiltelefone, insbesondere sogenannte Smartphones, Tablet-Computer, MP3-Player, tragbare Video- bzw. DVD-Player etc. Derartige informationstechnische Geräte, die nachfolgend auch abkürzend als IT-Geräte bezeichnet werden, verfügen immer häufiger über einen sogenannten Touchscreen, also eine Anzeigeeinrichtung, welche berührungsempfindlich ist und somit zum Steuern der Anzeigeeinrichtung durch einen Benutzer verwendet werden kann. Hierbei werden zunehmend sogenannte Wischbewegungen oder Wischgesten verwendet, die als Steuerbewegung dienen. Derartige Wischgesten sind beispielsweise das vertikale "Scrollen" von Listen oder das horizontale Blättern zwischen verschiedenen Ansichten, z. B. einer Bildergalerie. Bei den Wischgesten handelt es sich häufig um Bewegungen der Hand oder eines Fingers eines Benutzers derartiger Geräte. Da solche Geräte nur Anzeigeeinrichtungen mit begrenzter Größe aufweisen, ist eine Präzision dieser Wischgeste nicht leicht zu garantieren. Somit ist pro ausgeführter Wischgeste nur ein bestimmtes Maß an Scrollen oder Blättern möglich, um ein gewisses Mindestmaß an Präzision dieses Vorgangs zu erzielen. Danach muss erneut gescrollt oder geblättert werden, indem die ausgeführte Wischgeste unterbrochen bzw. beendet wird und der betreffende Finger zur Wiederholung der Wischgeste erneut zum Startpunkt zurückgeführt wird.

Somit muss zum Ausführen mehrfacher Wischgesten ein relativ großer Weg des betreffenden, die Wischgeste ausführenden Fingers zurückgelegt werden, wobei ein großer Anteil des zurückgelegten Wegs unnütz ist, da er nur der Zurückführung des Fingers zum Startpunkt der Wischgeste dient. Derartige lange Wege erhöhen auch den Zeitbedarf zum Durchführen derartiger Wischgesten.

Ferner ist bekannt, das Scrollen in längeren Listen dadurch zu beschleunigen, dass die Schnelligkeit der Wischgesten berücksichtigt wird. Hierunter leidet jedoch die Genauigkeit des Scrollvorgangs, da dessen Stoppen nicht direkt beeinflusst werden kann.

Außerdem ist es bekannt, alternativ zum Scrollen eine eigene Scrollleiste bzw. einen eigenen Scrollbalken vorzusehen. Der Nachteil hierbei ist jedoch, dass von der naturgemäß begrenzten Fläche auf der Anzeigeeinrichtung Platz für den eigentlichen Zweck, nämlich die Darstellung von Information, verloren geht.

Die EP 2 189 892 A2 betrifft ein Gerät und ein Verfahren zur Bildanzeige auf einem Touchscreen, bei dem eine Transformation eines Bilds - beispielsweise, Scrollen, Vergrößern und Verkleinern des Bilds - auf einer Anzeigeeinrichtung so lange kontinuierlich fortgesetzt wird, so lange der bzw. die Finger, der/die die Transformation ausgeführt hat bzw. haben, nach der Transformation weiterhin den Touchscreen in unveränderter Position berühren.

Die US 2009/0282370 A1 bezieht sich auf eine graphische Benutzerobertläche sowie auf ein darauf ausführbares Verfahren zum Vereinfachen von Dateneingaben. Eine Wiederholung von Wischgesten ist nicht angesprochen.

Die EP 2 045 699 A2 offenbart ein Verfahren zum Beeinflussen der Darstellung einer auf einem Touchscreen eines informationstechnischen Geräts angezeigten bildhaften Information. Die Steuerung erfolgt durch Wischgesten, die nach Erfassen eines Stillstandszustands am Ende der betreffenden Wischgesten durch Belassen des die Wischgesten ausführenden Fingers bzw. Stifts auf dem Touchscreen wiederholt werden können.

Der vorliegenden Erfindung liegt daher die Aufgabe zugrunde, diese Situation bei der Wiederholung von Transformationen von dargestellter Information zu verbessern, indem einerseits die benötigte Zeit reduziert und andererseits die Einfachheit, Genauigkeit und Geschwindigkeit der Handhabung beim Steuern der Darstellung der auf dem Touchscreen eines IT-Geräts dargestellten Information erhöht wird.

Diese Aufgabe wird durch ein Verfahren gemäß Anspruch 1, ein Computerprogrammprodukt gemäß Anspruch 7, einen Datenträger gemäß Anspruch 8 sowie ein informationstechnisches Gerät gemäß Anspruch 9 gelöst. Vorteilhafte Weiterbildungen der Erfindung sind Gegenstand der abhängigen Ansprüche.

Unter dem Begriff "Anzeigeeiririchtung" soll in allgemeinster Form eine Anzeigeeinrichtung zur Anzeige von bildhaften Informationen verstanden werden. Derartige Anzeigeeinrichtungen werden auch als Bildschirme oder Displays bezeichnet und können unter Einsatz verschiedenster Technologien wie beispielsweise durch Einsatz von LCDs, LEDs oder OLEDs hergestellt werden. Solche für die Realisierung der Erfindung verwendbaren Anzeigeeinrichtungen sind berührungsempfindlich und somit als sogenannte Touchscreens ausgestaltet, so dass ein Benutzer derartige Anzeigeeinrichtungen gleichzeitig auch als Eingabeeinrichtung benutzen kann, indem er mit einem Stift, einem Finger oder auch mehreren Fingern die Anzeigeeinrichtung an wenigstens einer Position berührt oder fester darauf drückt oder mit dem Finger bzw. Stift über die Anzeigeeinrichtung streicht, was auch als Wischgeste bezeichnet wird.

Unter dem Begriff "bildhafte Information" sollen dargestellte Informationen jeglicher Art verstanden werden, die in Form eines üblicherweise zweidimensionalen Bildes einem Benutzer angezeigt werden kann. Derartige Informationen können aber auch als 3D-Information oder Pseudo-3D-Information dargestellt werden. Solche Informationen können beispielsweise Bilder, Grafiken, aber auch Text oder dergleichen sein und in der Regel aus einer Matrix von Bildpunkten bestehen. Bildhafte Information in diesem Sinne sind auch Vektorgrafiken und sowie sämtliche Informationen, die auf heutigen Anzeigeeinrichtungen dargestellt werden bzw. angezeigt werden können.

Unter "Beeinflussen der Darstellung von bildhafter Information" wird die Veränderung der Darstellung mittels einer von einem Benutzer gewünschten Transformation der bildhaften Information verstanden. Solche Transformationen sind beispielsweise, jedoch nicht ausschließlich, gemäß dem erfindungsgemäßen Verfahren Translationen bzw. Verschiebungen, Rotationen bzw. Drehungen, Stauchungen (d. h. Verkleinerungen) und Streckungen (d. h. Vergrößerungen) der bildhaften Information. Um eine solche Transformation auszuführen, führt der Benutzer eine Steuerbewegung aus, welche die Transformation auslöst bzw. einleitet.

Bei einer auf einer Anzeigeeinrichtung des informationstechnischen Geräts angezeigten bildhaften Information wird zunächst eine erste Transformation der bildhaften Information in Abhängigkeit von der Steuerbewegung ausgeführt, die der Benutzer vorgenommen hatte, um diese Transformation vorzunehmen. Das erfindungsgemäße und mittels eines Prozessors, Rechners bzw. Computers implementierte, Verfahren zeichnet sich dadurch aus, dass bei oder nach der Beendigung der Steuerbewegung für zumindest eine definierte oder definierbare Zeitspanne ein Feld auf der Anzeigeeinrichtung bereitgestellt wird, das während dieser Zeitspanne aktivierbar bleibt bzw. aktiviert werden kann. Danach kann die erste Transformation so oft wiederholt werden, wie das Feld vom Benutzer aktiviert wird. Das Aktivieren kann dabei auf verschiedene Weisen ausgeführt werden: Bei dem Touchscreen kann dies durch ein einfaches Antippen mit einem Finger oder einem entsprechenden Stift geschehen. Das Ausführen einer weiteren Transformation, die identisch zur ersten Transformation ist, bedeutet somit eine Wiederholung der zuvor ausgeführten Transformation. Es versteht sich von selbst, dass das Feld auch nach dem Ausführen einer wiederholten Transformation während der genannten Zeitspanne aktivierbar bleibt bzw. aktiviert werden kann. Das Feld bezeichnet in anderen Worten einen Ort bzw. Bereich oder eine Fläche auf der Anzeigeeinrichtung.

Die Grundidee dieser Erfindung ist es somit, den Benutzer einer Anzeigeeinrichtung von dem Zwang zu befreien, jeweils die Steuerbewegung beim Wiederholen einer ausgeführten Transformation erneut ausführen und hierzu zuvor noch eine Rückführbewegung vornehmen zu müssen, sondern dem Benutzer stattdessen die Möglichkeit zu geben, durch einfaches Aktivieren eines auf der Anzeigeeinrichtung bereitgestellten Felds beliebig viele Wiederholungen der vorgenommenen ersten Transformation ausführen zu können. Diese Vorgehensweise ist sehr einfach und intuitiv. Außerdem kann dadurch die Geschwindigkeit beim Beeinflussen der Darstellung der auf der Anzeigeeinrichtung dargestellten Information erheblich erhöht werden.

Gemäß der Erfindung wird das Feld genau in demjenigen Bereich der Anzeigeeinrichtung gebildet, in dem die Steuerbewegung vom Benutzer beendet worden ist. Dies bietet den Vorteil, dass der Benutzer das Feld ohne weitere Bewegung eines Fingers parallel zur Oberfläche der Anzeigeeinrichtung aktivieren kann. Das bedeutet, dass der Benutzer nur beispielsweise mittels eines Fingers oder eines Stifts nur einfach das Feld zu berühren braucht, um es zu aktivieren. Hierbei wird davon ausgegangen, dass im Fall der Durchführung der Steuerbewegung mittels eines Fingers oder eines Stifts die Steuerbewegung durch Abheben des Fingers bzw. Stifts von der Anzeigeeinrichtung beendet wird. Das Ende der Steuer- bzw. Navigierbewegung kann auch z.B. dann angenommen werden, wenn deren Geschwindigkeit ein bestimmtes, entweder vorgegebenes oder einstellbares, Maß unterschreitet.

Bei den vorgenannten Fällen wird das Abheben des die Steuerbewegung ausführenden Fingers bzw. Daumens oder Zeigegeräts vom Touchscreen als Beendigung der Steuerbewegung und damit als Einleitung des Schritts der Bereitstellung des aktivierbaren Felds verwendet. Diese Vorgehensweise entspricht dabei in vorteilhafter Weise dem "natürlichen" Bewegungsablauf eines Benutzers eines Touchscreens. Somit kann diese Benutzungsweise als ergonomisch angesehen werden.

Es kann von Vorteil sein, wenn das Feld für den Benutzer nicht sichtbar ist, da dieser somit nicht durch das - gegebenenfalls nur kurzzeitig sichtbare - Feld gabgelenkt oder irritiert werden kann.

Es kann von Vorteil sein, wenn das aktivierbare Feld nur während einer begrenzten Zeitspanne aktiviert werden kann und danach automatisch wieder deaktiviert bzw. entfernt wird. Dies kann verhindern, dass ein Benutzer zu einem späteren Zeitpunkt nicht unbeabsichtigt durch Antippen des Felds eine früher ausgeführte Transformation wiederholt. Es kann beispielsweise festgelegt sein, dass das aktivierbare Feld nach Ablauf einer fest vorgegebenen Zeitspanne nach seiner Aktivierung automatisch wieder deaktiviert wird. So kann beispielsweise vorgesehen sein, dass nach Beendigung der Steuerbewegung und damit nach seiner Aktivierung das aktivierbare Feld eine Sekunde lang aktiviert werden kann und danach seine Aktivierbarkeit automatisch verliert.

Um einem Benutzer eine Anpassung an seine Gewohnheiten zu ermöglichen, kann es vorteilhaft sein, dass er die Zeitspanne einstellen kann, während der das Feld aktiviert werden kann. Dies gibt einem Benutzer eine große Freiheit darin, selber festlegen zu können, wie er eine Anzeigeeinrichtung unter Verwerdung des erfindungsgemäßen Verfahrens steuern bzw. beeinflussen möchte.

Der Standard-Anwendungsfall der vorliegenden Erfindung ist bei einem IT-Gerät mit einem berührungsempfindlichen Bildschirm - auch Touchscreen genannt - gegeben. Auf einem solchen Touchscreen werden die Steuerbewegungen als Wischbewegungen bzw. Wischgesten beispielsweise mittels eines Fingers und/oder eines Daumens oder aber mittels eines Zeigegeräts ausgeführt. Durch aufeinanderfolgendes bzw. wiederholtes Antippen des Felds kann der Benutzer in einfacher und intuitiver Weise eine hohe Anzahl an Wiederholungen der anfangs ausgeführten Transformation durchführen, ohne jeweils die entsprechenden Steuerbewegungen ebenfalls durchführen zu müssen.

Falls als Steuerbewegung eine Mehrfingerwischbewegung mit mindestens zwei Fingern oder mit dem Daumen und mindestens einem Finger ausgeführt wird, ist es für den Benutzer von Vorteil, wenn bei einer Beendigung der Steuerbewegung in jedem der Bereiche der Anzeigeeinrichtung, in dem eine mittels Finger oder Daumen ausgeführte Komponente der Steuerbewegung beendet wird, ein aktivierbares Feld zum Ausführen der weiteren Transformation gebildet wird. Unter "Komponente der Steuerbewegung" soll hierbei verstanden werden, dass beispielsweise bei einer durch Daumen und Zeigefinger durchgeführten Drehbewegung zur Ausführung einer Drehung der bildhaften Information auf der Anzeigeeinrichtung sowohl am Ende der Bewegung des Fingers als auch am Ende der Bewegung des Daumens ein aktivierbares Feld bereitgestellt wird. Bei Antippen eines der Felder wird dann die zuvor ausgeführte Transformation wiederholt. Dies reduziert den für den Benutzer entstehenden Aufwand für die wiederholte Ausführung der Transformation. Selbstverständlich kann es erfindungsgemäß auch vorgesehen sein bzw. vom Benutzer eingestellt werden, dass eine wiederholte Ausführung der Transformation nur dann stattfindet, wenn beide Felder nach Beendigung der Steuerbewegung aktiviert werden.

Eine weitere Möglichkeit, ein unbeabsichtigtes Wiederholen einer bereits ausgeführten Transformation durch Antippen eines aktivierbären Felds zu vermeiden, kann unter anderem darin bestehen, dass jedes aktivierbare Feld auch dann deaktiviert wird, wenn ein Bereich der Anzeigeeinrichtung außerhalb des Felds angetippt wird. Dies bietet den weiteren Vorteil, dass verschiedenartige Transformationen in der bisher bekannten Weise unmittelbar hintereinander ausgeführt werden können, ohne dass dies durch das erfindungsgemäße Bereitstellen des Felds zur Schaffung einer Möglichkeit der vereinfachten Wiederholung der zuvor ausgeführten Transformation beeinträchtigt wird; es versteht sich von selbst, dass die einzige "einschränkung" für die Ausführung dieses herkömmlichen Verfahrens darin besteht, dass die im Anschluss an die erste Transformation auszuführende Transformation nicht durch Antippen eines Bereichs begonnen werden kann, der in einem oder mehreren der bereitgestellten Felder liegt.

Die der Erfindung zugrunde liegende Aufgabe wird auch durch ein Computerprogrammprodukt bzw. ein Computerprogramm gelöst, welches eine Steuereinrichtung eines informationstechnischen Geräts steuert, um ein Verfahren gemäß der vorliegenden Erfindung ausführen zu können. Ferner wird die der Erfindung zugrunde liegende Aufgabe auch mit einem Datenträger gelöst, auf dem ein vorgenanntes Computerprogrammprodukt gespeichert ist und mit dessen Hilfe dieses Computerprogramm ausgeführt werden kann.

Ferner wird die der Erfindung zugrunde liegende. Aufgabe mit einem informations-technischen Gerät gelöst, das einen Touchscreen als Anzeigeeinrichtung und eine Steuereinrichtung aufweist, die zum Steuern der Anzeigeeinrichtung vorgesehen und so ausgestattet ist, dass sie die Anzeigeeinrichtung nach Maßgabe eines erfindungsgemäßen Verfahrens steuern kann.

Die Vorteile, Merkmale und Besonderheiten der unterschiedlichen Varianten des erfindungsgemäßen Verfahrens gelten in analoger Weise auch für das Computer-programmprodukt, den Datenträger sowie das informationstechnische Gerät gemäß der vorliegenden Erfindung, ohne dass dies erneut beschrieben werden müsste.

Im Folgenden wird die Erfindung anhand vorteilhafter Ausführungsformen unter Bezugnahme auf die Zeichnung näher erläutert. Es zeigen schematisch.
- Fig. 1: eine Draufsicht auf eine Anzeigeeinrichtung, beispielsweise eines Smartphones, in einer ersten Anzeigesituation,
- Fig. 2: eine der Fig. 1 ähnliche Darstellung der Anzeigeeinrichtung in einer zweiten Anzeigesituation,
- Fig. 3: eine der Fig. 1 ähnliche Darstellung der Anzeigeeinrichtung in einer dritten Anzeigesituation,
- Fig. 4: eine der Fig. 1 ähnliche Darstellung der Anzeigeeinrichtung in einer vierten Anzeigesituation, und
- Fig. 5: eine der Fig. 1 ähnliche Darstellung der Anzeigeeinrichtung in einer fünften Anzeigesituation.

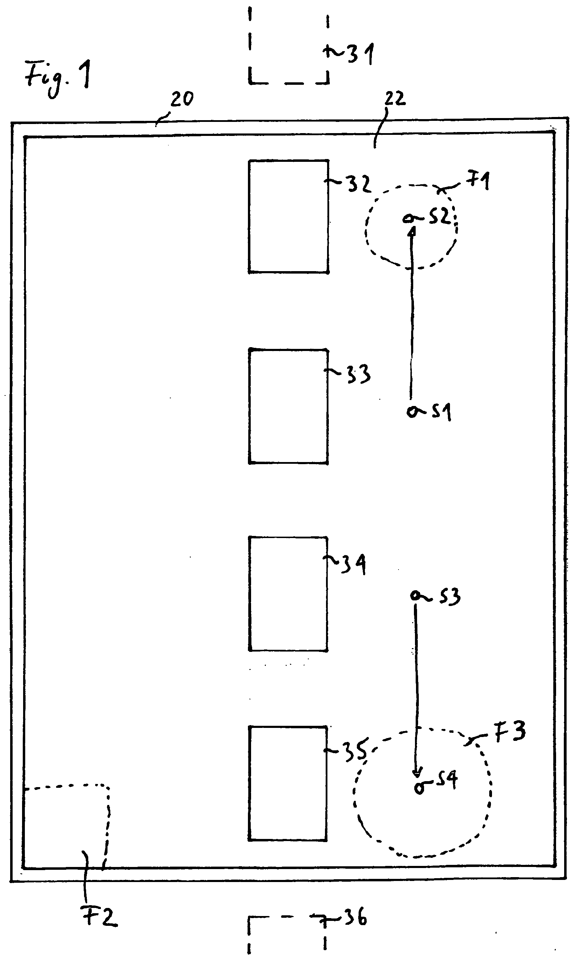

Bei der nachfolgenden Beschreibung vorteilhafter Ausführungsformen der Erfindung wird davon ausgegangen, dass es sich gemäß Fig. 1 bei dem informations-technischen Gerät 20 um ein Smartphone mit einem als Anzeigeeinrichtung 22 dienenden Touchscreen handelt, der mittels der Finger (und ggf. des Daumens) eines Benutzers beeinflusst werden kann. Selbstverständlich können statt der Finger auch speziell ausgebildete Stifte oder andere Gegenstände verwendet werden.

Richtungsangaben wie "links", "rechts", "oben" und "unten" beziehen sich nachfolgend jeweils auf die räumliche Orientierung bezüglich der Darstellung in den Figuren in der Zeichnungsebene, ohne dass dies eine Beschränkung darstellen soll. Sofern Bilder in Hochformat dargestellt sind, bedeutet dies, dass sich ihre Längsseite in Richtung von oben nach unten erstreckt, während sich die Längsseite von in Querformat dargestellten Bildern von links nach rechts erstreckt. Bei den vorgenannten Erstreckungsrichtungen besteht zwischen "von links nach rechts" und "von rechts nach links" sowie "von oben nach unten" und "von unten nach oben" etc. natürlich kein Unterschied. Außerdem wird davon ausgegangen, dass sich der Ausdruck "Bildhöhe" auf die Richtung von oben nach unten bezieht, während sich "Bildbreite" auf die Richtung von links nach rechts bezieht.

Auf dem Touchscreen 22 sind in Fig. 1 übereinander vier nur schematisch dargestellte Bilder 32 bis 35 in Hochformat abgebildet, die hier als Beispiel für eine bildhafte Information stehen sollen. Selbstverständlich können statt der Bilder auch Grafiken, Texte oder andere Informationen stehen, die auf dem Touchscreen abgebildet sind. Oberhalb des obersten Bildes 32 und außerhalb des Touchscreens 22 ist ein gestrichelt dargestelltes Bild 31 angedeutet, während unterhalb des untersten Bilds 35 ein ebenfalls außerhalb des Touchscreens 22 angeordnetes gestricheltes Bild 36 gezeigt ist. Wie intuitiv klar sein dürfte, werden die Bilder 31 und 36 erst nach einer entsprechenden Verschiebung bzw. Translation der Anzeige nach unten bzw. oben auf dem Touchscreen 22 dargestellt werden.

Rechts vom Bild 33 ist ein puriktartiger Fleck S1 dargestellt, und rechts neben dem Bild 34 ist ein Fleck S3 dargestellt. Auch der Fleck S3 ist ebenfalls wie alle anderen nachfolgend genannten Flecke S2 und S4 bis S12 im Wesentlichen punktartig dargestellt, ohne dass dies jeweils ausdrücklich spezifiziert wird. Diese Flecke S1 bis S12 dienen nur der Erläuterung der vorliegenden Erfindung und werden nicht wirklich auf dem Touchscreen 22 dargestellt, sondern bezeichnen jeweils in beispielhafter Weise Orte, an denen der Benutzer den Touchscreen 22 berührt oder die Berührung beendet, wie später im Einzelnen ausgeführt werden wird. Auch die jeweiligen Pfeile, welche die Wischbewegungen zwischen den verschiedenen Flecken symbolisieren sollen und nicht näher bezeichnet sind, werden auf dem Touchscreen 22 nicht dargestellt.

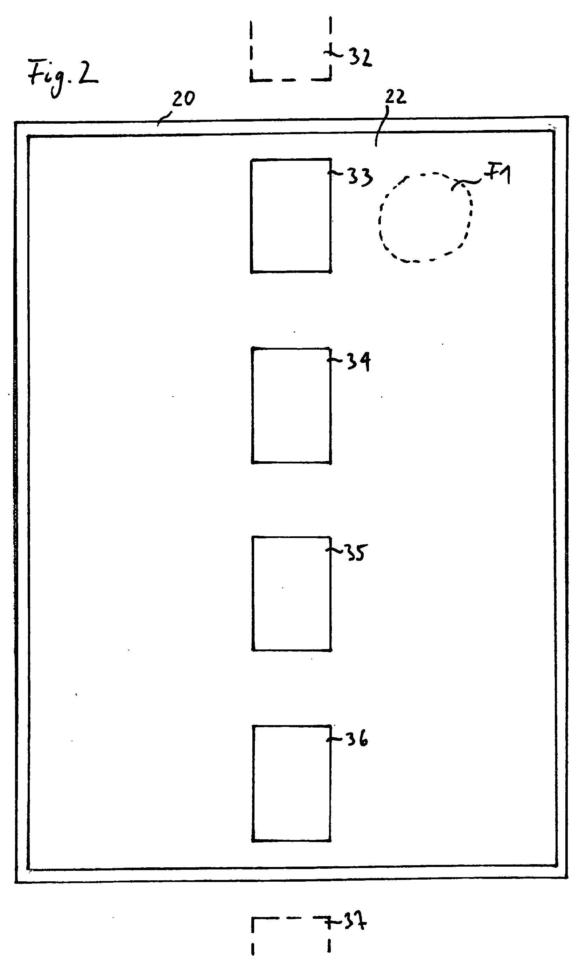

Berührt nun ein Benutzer mit einem Finger den Touchscreen 22 an dem Fleck S1 und zieht den Finger zum Fleck S2, wird der Bildinhalt nach oben gescrollt, so dass sich die in Fig. 2 dargestellte Anzeigesituation ergibt, in der von oben nach unten die Bilder 33 bis 36 an denjenigen Stellen angezeigt sind, an denen die Bilder 32 bis 35 in Fig. 1 zu sehen waren. Das oberhalb von Bild 33 gestrichelt angedeutete Bild 32 ist somit in Fig. 2 nicht mehr zu sehen. Sobald der Benutzer am Fleck S2 seinen Finger vom Touchscreen 22 abhebt, wird am Fleck S2 ein Feld F1 gebildet bzw. bereitgestellt. Da das Feld F1 nicht notwendigerweise auf dem Touchscreen 22 sichtbar ist, ist dieses nur gestrichelt angedeutet. Bei dieser Ausführungsform ist das Feld F1 in etwa kreisförmig ausgestaltet. Sobald der Benutzer auf das in Fig. 2 ebenfalls dargestellte Feld F1 tippt, wird der zuvor beschriebene Scroll- bzw. Translationsvorgang erneut ausgeführt, und es werden von oben nach unten die Bilder 34 bis 37 auf dem Touchscreen dargestellt, was jedoch nicht in einer eigenen Figur dargestellt ist. Es ist klar, dass der soeben beschriebene Vorgang des Antippens des Felds F1 beliebig oft wiederholt werden kann und jedes Mal einen Translationsvorgang bewirkt, sofern die darzustellende bildhafte Information dies ermöglicht.

Wenn dagegen gemäß Fig. 1 ein Benutzer den Finger am Fleck S3 auf den Touchscreen 22 aufsetzt und ihn nach unten zum Fleck S4 zieht, sind auf dem Touchscreen von oben nach unten die Bilder 31 bis 34 zu sehen. Nach dem Ende der Wischgeste und dem Abheben des Fingers vom Fleck S4 vom Touchscreen 22 wird an der Stelle des Flecks S4 ein Feld F3 gebildet, das gemäß diesem Beispiel ebenfalls kreisförmig ausgebildet, jedoch größer als das zuvor beschriebene Feld F1 ist. Die Größe und Form der jeweiligen Felder sowie die Zeitspanne, während der sie aktivierbar und damit benutzbar bleiben, ist dabei entweder geräteseitig fest vorgegeben oder kann auch durch den Benutzer eingestellt werden.

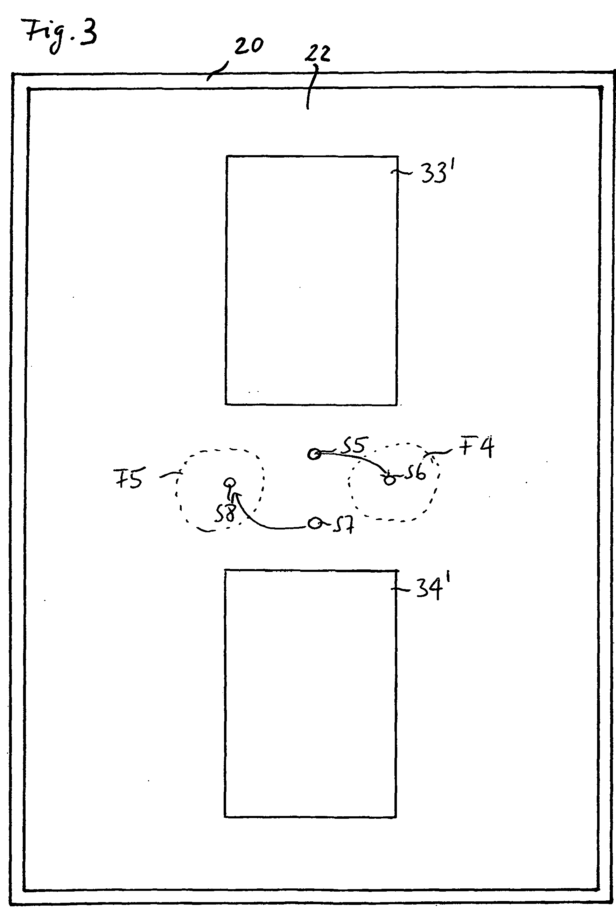

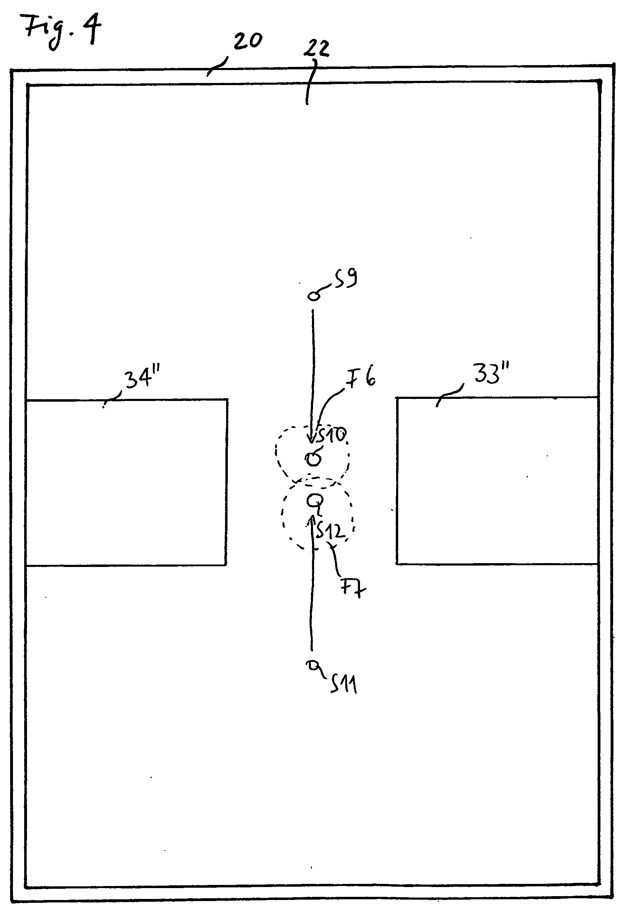

Wenn der Benutzer dagegen ausgehend von der Fig. 1 eine sogenannte Zweifingergeste ausführt, indem er einen Finger und dem Daumen an den Flecken S1 bzw. S3 auf den Touchscreen 22 aufsetzt und sie so weit auseinanderzieht, dass sie bei den Flecken S2 bzw. S4 enden, wird dadurch eine Vergrößerung der Anzeige auf dem Touchscreen 22 bewirkt. Ein Beispiel hiervon ist in Fig. 3 dargestellt, in der nur die vergrößerten Bilder 33' und 34' auf dem Touchscreen 22 dargestellt sind. Wenn nun ausgehend von Fig. 3 eine weitere Zweifingergeste unter Benutzung von Daumen und beispielsweise Zeigefinger in der Weise ausgeführt wird, dass Sie an den Flecken S5 und S7 auf dem Touchscreen 22 aufgesetzt und jeweils um ca. 90° nach rechts gedreht werden, so dass sie auf den Flecken S6 bzw. S8 enden, wird hierdurch eine Drehung des Bildinhalts um 90° bewirkt. Die Anzeigesituation nach der Drehung um 90° ist in Fig. 4 gezeigt. Gemäß Darstellung in Fig. 4 sind die beiden Bilder 34" und 33" somit im Querformat dargestellt. Nach der Beendigung dieser Wischgeste werden beim Abheben des Daumens und des Zeigefingers die Felder F4 und F5 an den Flecken S6 bzw. S8 bereitgestellt. Sobald gemäß einer Ausführungsform einer der beiden Flecken F4 und F5 berührt wird, wird die zuvor ausgeführte Drehung um 90° wiederholt, wonach dann die beiden Bilder 33' und 34' "auf dem Kopf' stehen, was jedoch nicht zeichnerisch dargestellt ist.

Selbstverständlich kann es auch vorgesehen sein, dass eine erneute Drehung um 90° nur dann stattfindet, wenn nicht nur eines der Felder F4 und F5 berührt und damit aktiviert wird, sondern wenn beide Felder aktiviert werden.

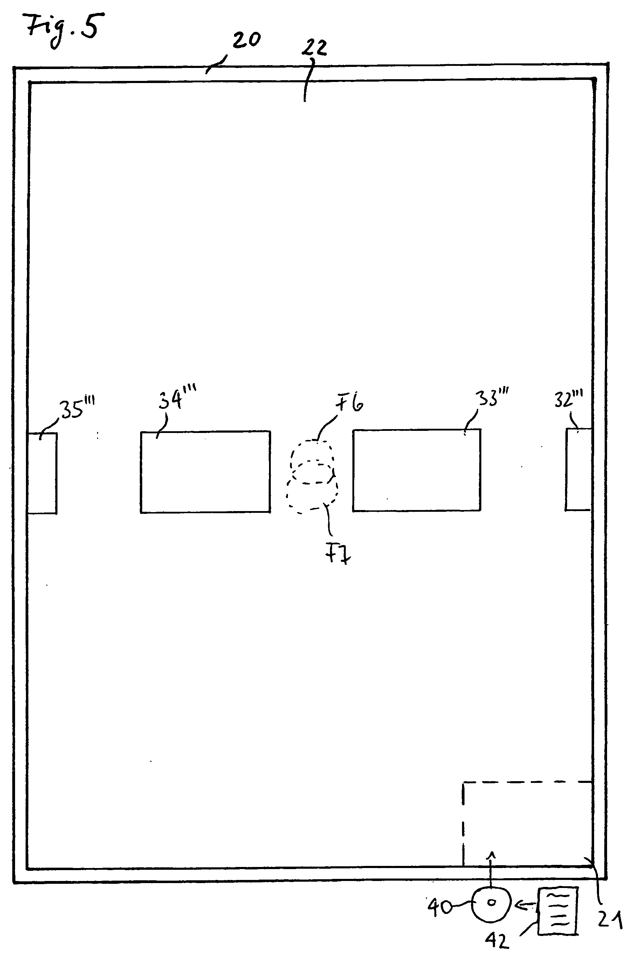

Ausgehend von Fig. 4 kann der Benutzer dann beispielsweise eine weitere Zweifingergeste ausführen, indem er mit Daumen und Zeigefinger an den relativ weit voneinander beabstandeten Flecken S9 und S11 auf den Touchscreen 22 greift und Daumen sowie Zeigefinger vertikal zu den Flecken S10 bzw. S12 zusammenführt, um eine Verkleinerung der Darstellung zu bewirken. Nach dem Ende dieser Wischgeste werden dann an den Flecken S10 und S12 zwei Felder F6 bzw. F7 gebildet, die sich bei diesem Beispiel überlappen. Diese Anzeigesituation ist in Fig. 5 dargestellt, in der die beiden Bilder 33"' und 34"' vollständig sowie die beiden Bilder 35'" und 32'" teilweise zu sehen sind und in der zusätzlich die aus der Wischgeste von Fig. 4 resultierenden Felder F6 und F7 gezeigt sind. Durch Antippen dieser Felder oder eines dieser Felder kann der Benutzer eine weitere Verkleinerung der Darstellung bewirken. Alternativ kann der Benutzer - wie bekannt ist - statt dessen eine horizontal verlaufende Wischgeste zu einer Verkleinerung der Darstellung ausführen, die gleich ist wie bei der vertikalen Wischgeste.

In Fig. 5 ist schließlich am rechten unteren Eck schematisch eine Steuereinrichtung 21 angedeutet, die üblicherweise als Prozessor bzw. als Chip ausgestaltet ist und zum Steuern der Anzeigeeinrichtung, vorzugsweise des gesamten informationstechnischen Geräts, ausgestaltet ist. Zum Steuern der Steuereinrichtung 21 dient ein Computerprogramm bzw. Computerprogrammprodukt 40, welches auf einem beispielhaft als CD-ROM 42 dargestellten Datenträger gespeichert werden kann und über eine geeignete Schnittstelle oder ein entsprechendes Lesegerät in die Steuereinrichtung 21 eingelesen werden kann.

Ohne dass dies gesondert erwähnt worden wäre, ist klar, dass die vorstehend beschriebenen Wischgesten beliebig oft durch einfaches Antippen des jeweiligen Felds bzw. der jeweiligen Felder wiederholt werden können. Dadurch ist eine sehr einfache und effiziente, jedoch sehr präzise und gleichzeitig schnelle Steuerung bzw. Beeinflussung der Darstellung der auf dem Touchscreen 22 dargestellten Information möglich.

Es ist festzuhalten, dass die unter Bezug auf die dargestellten Ausführungsformen beschriebenen Merkmale der Erfindung, wie beispielsweise die Form, Ausgestaltung und Anordnung des Felds bzw. der Felder sowie die jeweilige Aktivierung und Deaktivierung und die Dauer der Aktivierung, auch bei anderen Ausführungsformen vorhanden sein können, außer wenn es anders angegeben ist oder sich aus technischen Gründen von selbst verbietet.

### Bezugszeichenliste

20 = Informationstechnisches Gerät
21 = Steuereinrichtung/Chip
22 = Anzeigeeiririchtung/Touchscreen
31-37 = Bild/bildhafte Information
40= Computerprogramm
42 = Datenträger
F1-F7 = Feld
S1-S12 = Fleck

## Patentansprüche

1. Verfahren zum Beeinflussen der Darstellung einer auf einem Touchscreen (22) eines informationstechnischen Geräts (20) angezeigten bildhaften Information (31-37) mittels einer von einem Benutzer gewünschten Transformation der bildhaften Information (31-37), wobei die Transformation zumindest eine Translation und/oder eine Rotation und/oder eine Stauchung und/oder eine Streckung der bildhaften Information (31-37) umfasst,
aufweisend folgende Schritte:
- Ausführen einer ersten Transformation nach Maßgabe einer von dem Benutzer ausgeführten, die Transformation auslösenden Wischbewegung mittels eines Fingers und/oder eines Daumens und/oder eines Zeigegeräts auf dem Touchscreen (22),
- Bereitstellen eines Felds (F1, F3-F7) auf dem Touchscreen (22) derart, dass das Feld (F1, F3-F7) bei der Beendigung der Wischbewegung für zumindest eine definierte oder definierbare Zeitspanne (TA) aktivierbar bleibt, wobei das Feld (F1, F3-F7) in demjenigen Bereich des Touchscreens (22) gebildet wird, in dem die Beendigung der Wischbewegung erfolgt ist, und
- Ausführen je einer weiteren Transformation, die identisch zur ersten Transformation ist, sobald das Feld (F1, F3-F7) vom Benutzer aktiviert wird, wobei
die Beendigung der Wischbewegung durch Abheben des die Wischbewegung ausführenden Fingers und/oder Daumens und/oder Zeigegeräts vom Touchscreen (22) erfpigt und damit als Einleitung des Schritts der Bereitstellung des Felds (F1, F3-F7) verwendet wird, und
das Feld (F1, F3-F7) vom Benutzer durch Antippen mit dem Finger und/oder dem Daumen und/oder dem Zeigegerät aktiviert wird.

2. Verfahren nach Anspruch 1,
**dadurch gekennzeichnet, dass** das Feld (F1, F3-F7) für den Benutzer nicht sichtbar ist.

3. Verfahren nach Anspruch 1 oder 2,
**dadurch gekennzeichnet, dass** das aktivierbare Feld (F1, F3-F7) nach Ablauf einer definierten Zeitspanne (TA) nach seiner Aktivierung automatisch deaktiviert wird.

4. Verfahren nach einem der vorhergehenden Ansprüche,
**dadurch gekennzeichnet, dass** diejenige Zeitspanne, während der das Feld (F1, F3-F7) nach Beendigung der Wischbewegung aktivierbar bleibt, vom Benutzer eingestellt werden kann.

5. Verfahren nach einem der vorhergehenden Ansprüche,
**dadurch gekennzeichnet, dass** als Wischbewegung eine Mehrfingerwischbewegung mit mindestens zwei Fingern oder mit Daumen und mindestens einem Finger ausgeführt und bei Beendigung der Wischbewegung in jedem Bereich des Touchscreens (22), in dem eine mittels Finger oder Daumen ausgeführte Komponente der Wischbewegung beendet wird, ein aktivierbares Feld (F1, F3-F7) zum Ausführen der weiteren Transformation gebildet wird.

6. Verfahren nach einem der vorhergehenden Ansprüche,
**dadurch gekennzeichnet, dass** das aktivierbare Feld (F1, F3-F7) durch Antippen eines Bereichs des Touchscreens (22) außerhalb des Felds (F1, F3-F7) deaktiviert wird.

7. Computerprogrammprodukt (40) für eine Steuereinrichtung (21) eines informationstechnischen Geräts (20),
**dadurch gekennzeichnet, dass** das Computerprogrammprodukt zum Durchführen eines Verfahrens gemäß einem der vorhergehenden Ansprüche ausgestaltet ist.

8. Datenträger (42),
**dadurch gekennzeichnet, dass** auf dem Datenträger (42) ein Computerprogrammprodukt (40) gemäß Anspruch 7 gespeichert ist.

9. Informationstechnisches Gerät (20), aufweisend
- einen Touchscreen (22), und
- eine Steuereinrichtung (21) zum Steuern des Touchscreens (22),
**dadurch gekennzeichnet, dass** die Steuereinrichtung (21) so ausgestaltet ist, dass sie den Touchscreen (22) nach Maßgabe eines Verfahrens gemäß einem der Ansprüche 1 bis 6 steuern kann.

## Claims

1. A method for influencing the presentation of pictorial information (31-37) displayed on a touch screen (22) of an information technology device (20), by means of transformation of the pictorial information (31-37) as desired by a user, wherein the transformation comprises at least one translation and/or rotation and/or compression and/or expansion, of the pictorial information (31-37),
said method having the following steps:
-- carry out a first transformation based on a "sweeping" movement carried out by the user which triggers the transformation, which movement is executed by a finger and/or thumb and/or a pointing device, on the touch screen (22);
-- prepare a field (F1, F3-F7) on the touch screen (22), such that when the "sweeping" movement is ended the field (F1, F3-F7) remains activatable for at least one defined or definable time span (TA), wherewith the field (F1, F3-F7) is formed in the region of the touch screen (22) in which the end of the "sweeping" movement occurred; and
-- carry out an additional transformation (which may be one of a sequence of such additional transformations) which is identical to the first transformation, as soon as the field (F1, F3-F7) is activated by the user, wherein the end of the "sweeping" movement occurs by lifting of the finger and/or thumb and/or pointing device from the touch screen (22), and is utilized to initiate the step of preparation of the field (F1, F3-F7), and
the field (F1, F3-F7) is activated by the user by tapping with the finger and/or thumb and/or pointing device.

2. The method according to claim 1;
**characterized in that** the field (F1, F3-F7) is not visible to the user.

3. The method according to claim 1 or 2;
**characterized in that** the activatable field (F1, F3-F7) is automatically deactivated after expiration of a defined time span (TA) following its activation.

4. The method according to one of the preceding claims;
**characterized in that** the time span during which the field (F1, F3-F7) remains activatable following the end of the "sweeping" movement can be established and adjusted by the user.

5. The method according to one of the preceding claims;
**characterized in that** the "sweeping" movement consists of a movement carried out with at least two fingers or with a thumb and at least one finger, and at the end of the "sweeping" movement in a region of the touch screen (22) in which a component of the "sweeping" movement, which component is carried out by means of the finger(s) or thumb, is ended, an activatable field (F1, F3-F7) is formed, for carrying out the additional transformation.

6. The method according to one of the preceding claims;
**characterized in that** the activatable field (F1, F3-F7) is deactivated by tapping a region of the touch screen (22) outside the field (F1, F3-F7).

7. A computer program product (40) for a control device (21) of an information technology device (20);
**characterized in that** said computer program product is configured to carry out a method according to one of the preceding claims.

8. A data medium (42)
**characterized in that** a computer program product (40) according to claim 7 is stored on said data medium (42).

9. An information technology device (20), comprised of
-- a touch screen (22) and
-- a control device (21) for controlling the touch screen (22) ;
**characterized in that** the control device (21) is configured such that it can control the touch screen (22) by means of a method according to one of claims 1 to 6.

## Revendications

1. Procédé servant à influencer la représentation d'une information sous forme d'image (31 - 37) affichée sur un écran tactile (22) d'un appareil de technologie de l'information (20) au moyen d'une transformation, souhaitée par un utilisateur, de l'information sous forme d'image (31 - 37), sachant que la transformation comprend au moins une translation et/ou une rotation et/ou un écrasement et/ou un étirement de l'information sous forme d'image (31 - 37), présentant des étapes qui suivent consistant à :
- exécuter une première transformation conformément à un mouvement de balayage exécuté par l'utilisateur, déclenchant la transformation au moyen d'un doigt et/ou d'un pouce et/ou d'un appareil de pointage sur l'écran tactile (22) ;
- fournir un champ (F1, F3 - F7) sur l'écran tactile (22) de telle manière que le champ (F1, F3 - F7) reste, à la fin du mouvement de balayage, activable pour au moins un laps de temps (TA) défini ou pouvant être défini, sachant que le champ (F1, F3 - F7) est formé dans la zone de l'écran tactile (22), dans laquelle précisément le mouvement de balayage prend fin ; et
- exécuter respectivement une autre transformation, qui est identique à la première transformation dès que le champ (F1, F3 - F7) est activé par l'utilisateur, sachant que le mouvement de balayage prend fin en soulevant de l'écran tactile (22) le doigt et/ou le pouce et/ou l'appareil de pointage exécutant le mouvement de balayage et que la fin du mouvement de balayage est ce faisant utilisée comme lancement de l'étape consistant à fournir le champ (F1, F3 - F7), et
sachant que le champ (F1, F3 - F7) est activé par l'utilisateur en touchant l'écran avec le doigt et/ou le pouce et/ou l'appareil de pointage.

2. Procédé selon la revendication 1,
**caractérisé en ce que** le champ (F1, F3 - F7) n'est pas visible pour l'utilisateur.

3. Procédé selon la revendication 1 ou 2,
**caractérisé en ce que** le champ (F1, F3 - F7) activable est automatiquement désactivé à l'issue d'un laps de temps (TA) défini après son activation.

4. Procédé selon l'une quelconque des revendications précédentes,
**caractérisé en ce que** ledit laps de temps, au cours duquel le champ (F1, F3 - F7) reste activable à la fin du mouvement de balayage, peut être réglé par l'utilisateur.

5. Procédé selon l'une quelconque des revendications précédentes,
**caractérisé en ce qu'**est exécuté en tant que mouvement de balayage un mouvement de balayage à plusieurs doigts avec au moins deux doigts ou avec le pouce et au moins un doigt, et **en ce qu'**un champ (F1, F3 - F7) activable servant à exécuter l'autre transformation est formé à la fin du mouvement de balayage dans chaque zone de l'écran tactile (22), dans laquelle une composante du mouvement de balayage exécutée au moyen d'un doigt ou du pouce prend fin.

6. Procédé selon l'une quelconque des revendications précédentes,
**caractérisé en ce que** le champ (F1, F3 - F7) activable est désactivé en touchant une zone de l'écran tactile (22) à l'extérieur du champ (F1, F3 - F7).

7. Produit de programme informatique (40) pour un dispositif de commande (21) d'un appareil de technologie de l'information (20),
**caractérisé en ce que** le produit de programme informatique est configuré pour mettre en oeuvre un procédé selon l'une quelconque des revendications précédentes.

8. Support de données (42),
**caractérisé en ce qu'**un produit de programme informatique (40) selon la revendication 7 est mémorisé sur le support de données (42).

9. Appareil de technologie de l'information (20), présentant
- un écran tactile (22), et
- un dispositif de commande (21) servant à commander l'écran tactile (22),
**caractérisé en ce que** le dispositif de commande (21) est configuré de telle sorte qu'il peut commander l'écran tactile (22) conformément à un procédé selon l'une quelconque des revendications 1 à 6.
